# EUROPÄISCHE PATENTSCHRIFT

(11) **EP 0 428 853 B1**
(45) Veröffentlichungstag und Bekanntmachung des Hinweises auf die Patenterteilung: **14.12.1994**
(21) Anmeldenummer: 90119196.5
(22) Anmeldetag: 05.10.1990
(51) Int. Cl.: H01J 1/30, H01J 3/02

(54) **Kathode zur Erzeugung von intensiven, modulierten Ein- oder Mehrkanal-Elektronenstrahlen**
Cathode for producing intense, modulated, one- or multichannel electron beams
Cathode pour la production de faisceaux d'électrons intenses et modulés, monocanal ou multicanaux

(30) Priorität: 23.11.1989 DE 3938752
(43) Veröffentlichungstag der Anmeldung: 29.05.1991
(73) Patentinhaber: Riege, Hans, Dr., D-83278 Traunstein (DE)
(72) Erfinder: Riege, Hans, Dr., D-83278 Traunstein (DE)

(56) Entgegenhaltungen:
- APPLIED PHYSICS LETTERS, Bd. 54, Nr. 21, 22.Mai 1989, London,GB;Seiten 2071 -2073; H GUNDEL et al.: "Low-pressure hollow cathode switch triggered by a pulsed electron beam emitted from ferroelectrics"
- FERROELECTRICS, BD. 94, 1989, London,GB;Seiten 337 - 342; H GUNDEL et al.:"Fast polarization changes in PZT ceramics by high-voltage pulses"
- NUCLEAR INSTRUMENTS AND METHODS IN PHYSICS RESEARCH A, Bd. 280, August 1989,NL;Seiten 1 - 6; H GUNDEL et al.: "Fast polarization changes inferroelectrics and their application in accelerators"

## Beschreibung

Die Erfindung betrifft eine Quelle für Elektronenstrahlen, welche nach vorangehender Modulation zur Hochfrequenz- oder Mikrowellenerzeugung oder zum Transport von Informationen verwendet werden kann.

Elektronenquellen spielen in vielen modernen Technologiezweigen, wie in der Informationsverarbeitung, der Elektronik, der Materialbearbeitung, der Lasertechnik, der Mikrowellentechnik, der Hochfrequenztechnik und der Beschleunigertechnik eine Schlüsselrolle. Dabei werden nicht nur ständig wachsende Teilchenstrahldichten und Energien gewünscht, sondern die Strahlintensitäten, Strahldichten, Strahlformen, Pulslängen, und Strahlqualitäten müssen in weiten Grenzen variiert und reproduzierbar kontrolliert werden können. Die Anwendung der Teilchenstrahlen soll auch nicht nur auf Vakuum beschränkt sein, sondern ebenso in einer Umgebung aus Niederdruckgas oder Plasma möglich sein. Normalerweise ist eine definierte Energie der Einzelteilchen mit verhältnismäßig geringer Streubreite erforderlich. Eine effektive Quelle muß vier Bedingungen erfüllen.
· Auf einer Oberfläche eines emittierenden Mediums muß für die gewünschte Zeit eine definierte freie Ladungsmenge bereitgestellt werden.
· Ein elektrisches Feld muß die geladenen Teilchen von der Oberfläche abziehen, falls sie sich nicht durch ihr eigenes Raum- oder Flächenladungsfeld abstoßen.
· Dasselbe oder ein überlagertes elektrisches Feld soll den emittierten Strahl in der gewünschten Weise modulieren.
· Die emittierten Teilchen müssen gegebenenfalls durch ein weiteres äußeres elektrisches Feld auf die gewünschte Energie gebracht werden.

Heutzutage werden Elektronenstrahlen im wesentlichen mit Hilfe von thermionischen und photoelektrischen Methoden, sowie mit Sekundäremission oder reiner Feldemission erzeugt. Als emittierende Medien werden meist Metalle, Photokathoden oder Halbleiter im Hochvakuum benutzt. Tatsächlich sind weder die thermionische, noch die photoelektrische Methode, noch die Sekundäremission wirkliche Emissionseffekte, sondern brauchen alle ein starkes Extraktionsfeld. Dieses ist erforderlich wegen der endlichen Elektronenaustrittsarbeit, die ein elektrisch leitendes Medium aufzeigt.

Bei der Feldemission ist das Extraktionsfeld so hoch, daß selbst bei Raumtemperatur hohe Stromdichten aus Leitern extrahiert werden. Allerdings ist es technisch sinnlos mit solchen Feldern die Intensität des emittierten Strahls zu modulieren. Eine Verstärkung der Feldemission um Größenordnungen oder Feldemission bei stark reduziertem elektrischen Extraktionspotential erzeugen, kann mit der Anwendung von vielen feinen metallischen Spitzen auf der ermittierenden Oberfläche erzielt werden (Vakuum- Mikroelektronik, siehe z.B. T. Grandke, Phys. B1. 45 (1989), Nr. 10, S. 410).

Ein Beispiel für die Emission von Elektronen ohne äußeres Ziehfeld ist die Erzeugung von gepulsten Teilchenstrahlen mit Hilfe schnell umpolarisierter Ferroelektrika. Der Stand der Technik ist aus den Patentanmeldungen 88 08 636 | INPI, Paris und P 38 33 604.9 | Deutsches Patentamt, München, sowie aus den Publikationen H. Gundel, et.al., Appl. Phys Letters 54, 1989, 2071, and H.Gundel, et.al., Ferroelectrics 100 (1989) 1 ersichtlich. Ferroelektrika emittieren während einer schnellen Änderung ihrer spontanen Polarisation, z.B. durch Anregung mittels submikrosekunden langen Hochspannungspulsen, von ihrer freien Oberfläche starke Elektronenströme mit Stomdichten über 100 A/cm². Die gilt sogar, wenn kein externes elektrisches Extraktionsfeld angelegt wird. Diese ungehinderte Selbstemission von ferroelektrischen Oberflächen kann vereinfacht dadurch plausibel gemacht werden, daß zum einen Ferroelektrika im allgemeinen Nichtleiter mit kleiner Austrittsarbeit sind, und daß zum anderen die Spiegelladungen, welche bei einem Leiter die bereits ausgetretenen Elektronen unmittelbar zum Austrittsort zurückziehen, bei einem Ferroelektrikum (FE) durch die schnelle Änderung der spontanen elektrischen Polarisation auf die gegenüberliegende Seite der ferroelektrischen Probe gebracht worden sind. Das durch die Spiegelladungen auf die aus dem ferroelektrischen Material ausgetretenen Elektronen ausgeübte Feld ist gegenüber dem durch die Oberflächenladungen erzeugten Eigenraumladungsfeld vernachläßigbar.

Der Erfindung liegt die Aufgabe zugrunde Elektronenstrahlen mit kontrollierbarer Zeitstruktur, Geometrie (z.B. mit rundem, band- oder ringförmigem Strahlquerschnitt), Stromstärke und Stromdichte zu erzeugen.

Diese Anforderungen werden gelöst durch eine Kathode bestehend aus
einer dünnen ferroelektrischen Schicht FE,
zwei Elektrodenanordnungen RE und GE auf beiden Seiten der Schicht FE,
einer externen Modulationselektrode ZE in Vakuum oder Niederdruckgas im Abstand von bis zu mehreren Millimetern von der emittierenden Oberfläche,
zwei elektrischen Schaltkreisen zur Felderzeugung und zur Feldmodulation zwischen RE und GE einerseits, sowie zwischen ZE und GE andererseits,
· wobei die FE-Schichtdicke so dünn (< 100 µm) gewählt wird, daß die die Amplituden der an die Elektroden RE und GE angelegten Spannungspulse zum Schalten der spontanen ferroelektrischen Polarisation und zur Anregung der damit verbundenen Elektronenemission einerseits unter 100 V gedrückt werden, und damit auch die kinetische Elektronenenergie, andererseits aber kein Ausbleiben der Emission durch die mit abnehmender Schichtdicke zunehmende gegenseitige Ladungskompensation der getrennten Polarisationsladungen auf beiden Seiten der FE-Schicht stattfindet,
· und wobei die externen elektrischen Spannungsamplituden an der Hilfselektrode ZE ebenfalls unter dem Niveau von 100 Volt liegen und damit eine leichte zeitliche Modulation der niederenergetischen, emittierten Elektronenstrahlen mit niederspannungselektronischen Mitteln ermöglicht wird.

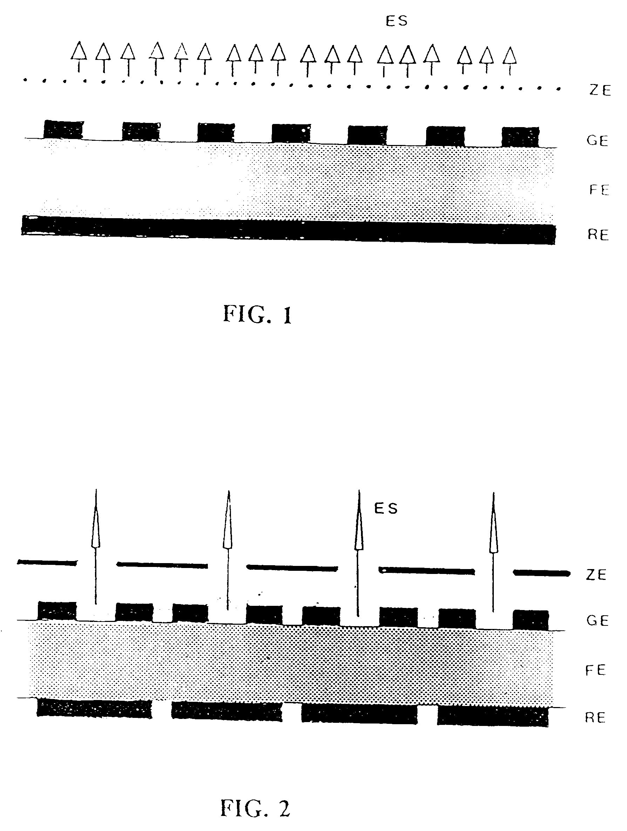

Fig. 1 stellt eine Anordnung dar bestehend aus einer ferroelektrischen Schicht FE und drei Elektroden RE, GE und ZE, wobei RE und GE zum Polarisationsschalten von FE und ZE zum Modulieren der emittierten Elektronenstrahlen ES benutzt werden. Die Gitterelektrode GE auf der FE-Schicht muß durch beliebig geformte Öffnungen die freie Emission von Elektronen zulassen. Die rückseitige Elektrode RE kann, muß aber nicht, aus einer durchgehenden leitenden Schicht geformt sein. Zwischen GE und RE wird der zum Polarisationsschalten erforderliche Niederspannungspuls angelegt. Die separate Elektrode ZE dient zum Modulieren der emittierten Elektronenstrahlen ES, ebenfalls mit entsprechenden Niederspannungspulsen aus einem separaten Schaltkreis. ZE muß geeignete Öffnungen besitzen, um ebenfalls den Weitertransport der Elektronenstrahlen garantieren.

Bei einheitlicher Ausbildung der Elektroden GE und RE läßt sich der gesamte betroffenene FE-Oberflächenbereich gleichzeitig schalten, wodurch ein großflächiger im Mittel homogener Elektronenstrahl niedriger kinetischer Energie emittiert wird. Dieser Strahl kann mit Hilfe eines niedrigen, schnell veränderlichen Potentials an der Elektrode ZE gesperrt oder mit definierter Pulsdauer durchgelassen, oder mit sehr hohen Frequenzen im Gigaherzbereich moduliert werden.

Die komplette Kathode (FE-RE-GE-ZE) liefert modulierte Elektronenströme niedriger kinetischer Energie, bedingt durch die Spannungsfestigkeit zwischen GE und ZE. Erfordert die Anwendung eine höhere Elektronenenergie, so muß diese durch die externes, nicht zur Kathodenanordnung gehöhrendes elektrisches Feld mittels Weiterbeschleunigung der Elektronen herbeigeführt werden.

Fig. 2 stellt eine Kathode dar bestehend aus einer FE-Oberfläche, welche in getrennte Bereiche aufgeteilt ist. Dadurch läßt sich ein System von gepulsten multiplen Elektronenstrahlen ES erzeugen, von denen jeder individuelle Strahl getrennt moduliert werden kann.

Die Kathoden (Figs. 1 und 2) nützen die Tatsache aus, daß bei dünnen Schichten mit sehr niedrigen Spannungen, z.B. mit weniger als 100 V, schnelles Polarisationsschalten und eine flächenhafte intensive Elektronenemission bewerkstelligt werden kann. Die mittlere Energie der emittierten Elektronen in eV ist von derselben Größenordnung, wie die Erregerspannung in Volt. Gerade dadurch reduziert sich auch die zur zeitlichen Modulation der emittierten Elektronenstromstärke nötige Modulationsspannung auf dieselbe Größenordnung. Da die zur Polarisationsumkehr nötigen elektrischen Felder, beispielsweise bei PZT- und PLZT-Keramiken, im Bereich von 10 bis 100 kV/cm liegen, ergeben sich für solche Kathodenmaterialien Schichtdicken von 10 bis 100 µm.

Je nach Anordnung (Figs. 1 oder 2) ergibt sich die Emissionsstromdichte j aus dem Anteil der umgekehrten, erzeugten oder vernichteten, spontanen Polarisation ΔPₛ und der Zeitspanne Δt, in der diese Änderung bewirkt wird, zu j=ΔPₛ/Δt. Die Emissionspulslänge ist normalerweise nicht zeitlich kongruent korreliert mit der Pulslänge der externen Polarisationsumkehrpulse, die zwischen der (Gitter-) Elektrode GE und der rückseitigen Elektrode RE auf der FE-Schicht angelegt werden müssen, sondern sie kann kürzer oder etwa gleich derselben sein. Erst durch die Modulation mit Spannungen auf dem Elektronikniveau über die Elektrode ZE läßt sich zeitlich und räumlich jede gewünschte Emissionscharakteristik erzeugen. Die totale emittierte Elektronenstromstärke I ergibt sich aus j und der emittierenden Fläche F zu I = j × F. Die mittlere Emissionsstromdichten und Stromstärke hängen dann noch von der Pulsfrequenz und der Pulslänge ab.

Als Beispiel für eine Anwendung mit hohem Emissionsstrom sei die Anregung eines etwa 40 ns langen Primärpulses über einheitliche Elektroden GE und RE genannt. Dieser Emissionspuls wird mit einer HF-modulierten Ziehelektrode ZE zu einem 40 ns langen Pulszug mit einer Repetitionsrate im Gigaherzbereich umformt. Voraussetzung ist, daß die Amplitude der (z.B. sinusförmigen) Modulationsfeldstärke den Wert der mittleren kinetischen Elektronenemissionsenergie in eV übersteigt. Besitzt die Elektrode ZE Öffnungen zum Durchtritt der Elektronen, so wird der transportierte Elektronenstrahl während der negativen Halbwelle blockiert und während der positiven Halbwelle weiterbeschleunigt (Fig. 1).

Die primäre Beschleunigung von der FE-GE- Oberfläche mittels der von der Elektrode ZE aufgebrachten Spannung erfolgt entlang der vakuum-, gas- oder plasmagefüllte Strecke GE-ZE, deren Länge je nach der Dicke der FE-Schicht und der damit bedingten kinetischen Elektronenenergie und nach der zwischen GE und ZE zu haltenden Spannung gewählt wird. Die Elektrode ZE dient gleichzeitig als Maske zur teilweisen Ausblendung von Primärstrahlanteilen.

Eine spezifische Anwendung der Erfindung betrifft eine großflächige, gleichförmig modulierte Elektronenquelle (Fig. 1). Alle Teile des Strahls erfahren dabei dieselbe Modulation durch ein zeitabhängiges, elektrisches Potential, welches über die Elektrode ZE aufgebracht wird. Die durch die Laufzeit des Modulationspotentials auftretenden Phasenunterschiede können später am emittierten Strahl geometrisch kompensiert werden (siehe z.B. M. Bizek et.al., IEEE Transactions on Plasma Science, Vol. 16, Nr. 2 (1988), S. 258). Die mittlere Intensität des emittierten Strahls wird durch die Stärke der spontanen Polarisationsäderung ΔPₛ und durch die Wiederholfrequenz der Emissionspulse bestimmt. Bei Emissionsstromdichten von 10 bis 30 A/cm², welche mit ferroelektrischen PLZT-Keramiken erzielt werden können, sind mit mehreren cm² aktiver Oberfläche Stromamplituden bis in den Kiloamperebereich möglich. Damit lassen sich technische Anwendungen auf dem Gebiet der Mikrowellenerzeugung realisieren.

Eine andere Art der Realisierung betrifft eine Elektronenstrahlquelle nach Fig. 2, bei der einige oder sehr viele Einzelanteile des Gesamtstrahls individuell moduliert werden können. Die mikroelektronische Ansteuerung der Einzelkanäle erfolgt parallel, z.B. über getrennt steuerbare Elektroden RE. Zur Polarisationsänderung einer einzelnen emittierenden Mikrozelle sind größenordnungsmäßig 100 ns-Pulse mit Stromdichten von eingen 100 A/cm² und 10 bis 30 kV/cm Feldamplitude über einer Schichtdicke von weniger als 10 µm erforderlich. Die Elektrode ZE dient in diesem Fall als Maske zum Ausblenden unerwünschter Strahlanteile, sowie zur Beschleunigung der Einzelstrahlen auf eine definierte kinetische Energie, die dem Verwendungszweck angepaßt ist.

Für alle erfindungsgemäß beschriebenen Kathoden ist die Verwendung von ferroelektrischem Material Bedingung, welches die schnellen, bis in den Gigaherzbereich gewünschten, Schalteigenschaften bei entsprechender Emissionsfähigkeit besitzt. Solche Materialien findet man speziell unter den perovskitischen Ferroelektrika, wie z.B. feinkörnige PLZT Keramiken, wobei auch darunter bei weitem nicht alle Stoffgruppen geignet sind. Als günstig haben sich z.B. zirkoniumreiche PLZT Keramiken, wie etwa PLZT 2/95/5 erwiesen.

Gewerbliche Anwendungen ergeben sich allgemein als Quellen für stromstarke Teilchenbeschleuniger, wie sie z.B. zum Betrieb von freien Elektronenlasern erforderlich sind, sowie als Quellen für die Erzeugung von Mikrowellen-, Röntgen- und Laser-Strahlung, oder als neuartige Bauelemente in der Mikroelektronik (Mikrovakuumschalter und Mikrolaser). Gewerbliche Anwendungen der Anordnungen nach Anspruch 3 werden von allem in der Erzeugung elektromagnetischer Wellen bis weit in den Gigahersbereich gesehen (im Einklang mit den Prinzipien von Klystrons und Gigatrons, siehe z.B. H.M. Bizek et.al. IEEE Transactions on Plasma Science, Vol. 16, Nr. 2 (1988) S. 258). Die Vorteile der hier beschriebenen ferroelektrischen Kathode liegen in der effizienten Modulation der emittierten Elektronenstrahlen, sowie in der einfacheren Herstellung der Gesamtanordnung nach den in der Mikroelektronik bekannten Dünnschichtmethoden. Da die hier beschriebene Kathodenanordnung nur ebene Schichten benötigt, gestaltet sich auch ihre Herstellung weniger schwierig als die der in der Vakuummikroelektronik üblichen Feldemissionskathoden, welche eine genaue Kontrolle der Gleichmäßigkeit der ultrafeinen emittierenden Spitzen (mit µm-Radien) erfordern.

Die Anordnung nach Bild 2 erlaubt die parallele Übertragung von Informationen durch getrennt gesteuerte Elektronenstrahlen. Die Informationen können in bekannter Weise auf einem Zielschirm optische sichtbar gemacht werden. Die mögliche hohe Bildpunktdichte erlaubt die Konstruktion von Kathodenstrahlröhren mit sehr hoher Auflösung. Während eine konventionelle Kathodenstrahlröhre eine strahlenoptisch und elektronisch aufwendige Serienverarbeitung eines einzelnen oder, im Falle von farbigen Bildröhren, mehrerer Elektronenstrahlen erfordert, erlaubt die Parallelansteuerung eine optisch einfache, kompakte und ultraflache Ausführung der Elektronenstrahlröhre. Die Zusammenfassung mehrerer Elektronenstrahlkanäle zu einer gemeinsamen Bildpunktgruppe in Kombination mit einer entsprechenden Lochmaskenanordnung erlaubt die Verwendung konventioneller Farbphosphorschirme zur Darstellung farbiger Bilder.

## Patentansprüche

1. Kathode zur Erzeugung von gepulsten, modulierten Elektronenstrahlen bestehend aus
einer dünnen ferroelektrischen Schicht FE,
zwei Elektrodenanordnungen RE und GE auf beiden Seiten von FE,
einer externen Modulationselektrode ZE in Vakuum oder Niederdruckgas im Abstand von bis zu mehreren Millimetern von der emittierenden Oberfläche,
zwei elektrischen Schaltkreisen zur Felderzeugung und zur Feldmodulation zwischen RE und GE einerseits, sowie zwischen ZE und GE andererseits,
dadurch gekennzeichnet, daß
· die FE-Schichtdicke so dünn ( < 100 µm) gewählt wird, daß die die Amplituden der an die Elektroden RE und GE angelegten Spannungspulse zum Schalten der spontanen ferroelektrischen Polarisation und zur Anregung der damit verbundenen Elektronenemission einerseits erheblich unter 100 V gedrückt werden, und damit auch die kinetische Elektronenenergie unter 100 eV, andererseits aber kein Ausbleiben der Emission durch die mit abnehmender Schichtdicke zunehmende gegenseitige Ladungskompensation der getrennten Polarisationsladungen auf beiden Seiten der FE-Schicht stattfindet,
· die externen elektrischen Spannungsamplituden an der Hilfselektrode ZE ebenfalls unter dem Niveau von 100 Volt liegen und damit eine leichte zeitliche Modulation der niederenergetischen, emittierten Elektronenstrahlen mit neiderspannungselektronischen Mitteln ermöglicht wird.

2. Kathode nach Anspruch 1,
dadurch gekennzeichnet, daß
· die sich die einheitliche Gitterelektrode GE und die rückseitige Elektrode RE über den gesamten emittierenden FE-Oberflächenbereich erstrecken, womit durch Spannungspulserregung eine räumlich homogene Polarisationsänderung erzeugt und von FE ein entsprechend homogener Elektronenstrahl emittiert wird, dessen Querschnitt durch die geometrische Form der Öffnungen der Elektrode GE bestimmt ist.
· der an der Elektrode ZE angebrachte Modulationsschaltkreis Pulse mit Spannungsamplituden liefert, die nur wenig über der niedrigen kinetischen Energie der emittierten Elektronen liegen, wodurch Elektronenstrahlpulsezüge mit der Frequenz des Modulationsfeldes erzeugt werden,
· einen Abstand und eine Größe der Öffnungen in ZE im nachfolgenden Transport- und Beschleunigungsraum, welche zur Ausbildung einer räumlich weitgehend gleichmäßigen Dichte des Elektronenstrahls führen, dessen Energie außerhalb von ZE mittels externer Felder auf die für die Anwendung nötige Endenergie gebracht werden kann.

3. Kathode nach Anspruch 1,
dadurch gekennzeichnet, daß
· die Elektroden RE und GE in Teilbereiche, die mehrere Emissionskanäle umfassen können, aufgeteilt sind, in denen die Stromstärke und Energie der emittierten Elektronen, sowie die Pulsfrequenz getrennt gesteuert werden können, was die Erzeugung einer Vielzahl von getrennt modulierten und intensitätsgesteuerten Einzelelektronenstrahlen herbeiführt,
· die Elektrode ZE als Maske dient um definierte Einzelstrahlen auszublenden, und zu beschleunigen auf eine Energie, welche für die Anwendung erforderlich ist, (um z.B. beim Auftreffen auf einen Fluoreszenzschirm eine zur Elektronenstromstärke proportionale Lichtemission hervorzurufen),
· die Multikanalelektroden GE in Untersysteme aufgeteilt sind, welche Elektronenstrahlen für den Transport komplexerer Informationen erzeugen. (z.B. von Bildlichen Farbdarstellungen jegliche Art).

4. Kathode nach Anspruch 1,
dadurch gekennzeichnet, daß
ein FE Material verwendet wird, dessen Polarisation bis zu Frequenzen im Gigaherzbereich einwandfrei schaltbar ist und von dessen Oberfläche bei einer Schichtdicke unter 100 µm noch unschwierig Emission angeregt werden kann, z.B. perovskitische Ferroelektrika, wie etwa PLZT Keramiken.

## Claims

1. A cathode for the production of pulsed, modulated electron beams comprising a thin ferroelectric layer FE, two electrode arrangements RE und GE on both sides of said layer FE, an external modulation electrode ZE mounted in vacuum or low-pressure gas at a distance of up to several millimeters from the emitting surface of said layer FE, two electrical circuits for generating an electric field between RE und GE on the one hand and a modulation potential between ZE and GE on the other hand, characterized in that
- the thickness of said FE layer is chosen so small (< 100 µm), that the amplitudes of the voltage pulses applied to the electrodes RE and GE for switching the spontaneous ferroelectric polarization of FE and for exciting so the electron emission, are on the one hand decreased quite below 100 V, and consequently also the kinetic energy of the emitted electrons below 100 eV, but, on the other hand, no suppression of the emission occurs owing to the mutual attraction between the charge layers generated after polarization switching on both surfaces of the charge layers generated after polarization switching on both surfaces of the FE cathode, which grows as the thickness of the FE layer decreases.
- the amplitudes of the external voltage applied to the auxiliary electrode ZE are also below 100 V and, hence, an easy temporal modulation of the emitted electron beam current can be achieved with low-voltage electronic circuits,

2. A cathode according to claim 1, characterized in that
- the grid electrode GE and the rear electrode RE extend both over the total emitting surface area of FE such that after excitation with voltage pulses an homogeneous polarization change of the FE layer is generated over the whole cathode surface and a corresponding homogeneous electron beam is emitted, the cross section of which is defined by the geometrical shape of the holes in the grid electrode GE,
- the modulation circuit connected to the electrode ZE delivers voltage pulses with amplitudes corresponding to a slightly higher potential than the kinetic electron energy, whereby electron beam pulse trains with the frequency of the modulation field are generated,
- the distance and the size of the holes in the electrode ZE are chosen such, that in the adjacent transport and acceleration space gap a spatially uniform density of the electron beam is achieved, the final kinetic electron energy required by the dedicated use of the cathode being obtainable with external fields outside of ZE.

3. A cathode according to claim 1, characterized in that
- the electrodes RE and GE are subdivided into partial zones, which can comprise one or more emission channels, wherein the electron beam intensity and energy, as well as the pulse frequency, can be separately controlled allowing so the emission of a multitude of individual electron beams modulated in time and in intensity,
- the electrode ZE serves as a mask for extracting defined electron beams and accelerating them up to the energy of utilization (e.g. in order to produce light emission proportional to the electron intensity, when hitting a fluorescent screen),
- the multichannel electrodes GE are subdivided in subsystems, which generate electron beams for the transfer of more complex informations (e.g. for colour image reproduction of any kind).

4. A cathode according to claim 1, characterized in that
- FE materials are used, e.g. ferroelectric perovskites, like PLZT ceramics, the polarization of which bieng easily switchable until far in the GHz range, and from the surface of which, at layers thinner than 100 µm, emission can still easily be excited.

## Revendications

1. Cathode pour la production de faisceaux d'électrons pulsés et modulés, comprenant une couche mince ferroélectrique FE, deux arrangements d'électrodes RE et GE disposés de chaque côté de FE, une électrode externe de modulation ZE disposée dans le vide ou dans un gaz à basse pression à une distance de la surface émettrice pouvant atteindre plusieurs millimètres, deux circuits électriques pour générer un champ électrique entre RE et GE d'une part, et un champ de modulation entre ZE et GE d'autre part, caractérisée en ce que
- I'épaisseur de la couche FE est choisie si mince (<100µm), que les amplitudes des impulsions de tension électrique appliquées aux électrodes RE et GE pour la commutation de la polarisation ferroélectrique spontanée et pour l'excitation de l'émission d'électrons liée à celle-ci, sont d'une part abaissées sensiblement en dessous de 100 V, et par conséquent l'énergie cinétique des électrons est aussi abaissée en dessous de 100 eV, mais que d'autre part, il ne se produit aucune absence d'émission par l'attraction réciproque des charges de polarisation séparées sur les deux côtés de la couche FE qui augmente lorsque l'épaisseur de la couche diminue,
- les amplitudes de tension électrique externe appliquées à l'électrode auxiliaire ZE sont également situées en dessous de 100 V et ainsi une facile modulation en temps réel des faisceaux d'électrons émis à faible énergie devient possible avec des moyens électroniques à basse tension.

2. Cathode selon la revendication 1, caractérisée en ce que
- l'électrode de grille GE et l'électrode arrière RE s'étendent sur la totalité de la zone de surface émettrice FE, de sorte qu'avec une excitation par impulsions de tension électrique, un changement de polarisation homogène dans la couche FE est crée et un faisceau d'électrons homogène correspondant est émis, dont la section transversale est définie par la forme géométrique des ouvertures de l'électrode GE,
- le circuit de modulation prévu sur l'électrode ZE fournit des impulsions ayant des amplitudes de tension situées seulement légèrement au dessus de la faible énergie cinétique des électrons émis, de sorte que des trains d'impulsions de faisceaux d'électrons ayant la fréquence du champ de modulation sont crées,
- un écartement et une grandeur des ouvertures de ZE dans l'espace ultérieur de transport et d'accélération sont prévus, qui donnent au faisceau d'électrons une densité de courant sur l'espace sensiblement constante, l'énergie dudit faisceau d'électrons à l'extérieur de ZE pouvant être amenée, au moyen de champs externes, à l'énergie finale requise pour l'utilisation.

3. Cathode selon la revendication 1, caractérisée en ce que
- les électrodes RE et GE sont partagées en zones partielles pouvant comporter plusieurs canaux d'émission, dans lesquelles l'intensité et l'énergie des électrons émis ainsi que la fréquence des impulsions peuvent être commandées séparément, ce qui entraîne la création d'une pluralité de faisceaux d'électrons individuels séparément modulés et commandés en intensité,
- l'électrode ZE sert de masque pour extraire des faisceaux d'électrons définis et les accélérer jusqu'à ce qu'ils atteignent une énergie qui est nécessaire pour l'utilisation (pour, par exemple, créer une émission de lumière proportionnelle à l'intensité des électrons lors de leur impact sur un écran de fluorescence),
- les électrodes GE à canaux multiples sont partagées en sous-systèmes qui créent des faisceaux d'électrons pour le transport d'informations plus complexes (par exemple, de représentations graphiques quelconques en couleurs).

4. Cathode selon la revendication 1, caractérisée en ce qu'est utilisé un matériau ferroélectrique, par exemple des ferroélectriques à base de pérovskites tel que des céramiques PLZT, dont la polarisation est aisément commutable jusqu'à des fréquences situées dans le domaine des gigaherz, et de la surface duquel, à une épaisseur de couche inférieure à 100 µm, on peut encore facilement exciter une émission.
